# EUROPÄISCHE PATENTSCHRIFT

(11) **EP 1 191 855 B1**
(45) Veröffentlichungstag und Bekanntmachung des Hinweises auf die Patenterteilung: **31.03.2004**
(21) Anmeldenummer: 00929564.3
(22) Anmeldetag: 27.05.2000
(51) Int. Cl.: A23K 1/00, A23K 1/16, A23K 1/18

(54) **ENERGIEREICHE FUTTERFLOCKEN FÜR FISCHE UND INVERTEBRATEN SOWIE VERFAHREN ZUR HERSTELLUNG**
ENERGY-RICH FOOD FLAKES FOR FISH AND INVERTEBRATES AND METHOD FOR THE PRODUCTION THEREOF
FLOCONS ALIMENTAIRES RICHES EN ENERGIE POUR POISSONS ET INVERTEBRES AINSI QUE PROCEDE DE FABRICATION DESDITS FLOCONS

(30) Priorität: 14.06.1999 DE 19926932
(43) Veröffentlichungstag der Anmeldung: 03.04.2002
(73) Patentinhaber: Tetra Werke Dr.rer.nat. Ulrich Baensch GmbH, 49324 Melle (DE)
(72) Erfinder: SCHMIDT, Hartmut, D-49124 Georgsmarienhütte (DE); KÜRZINGER, Hubert, D-49324 Melle (DE)
(74) Vertreter: Miller, Alexander
(86) Internationale Anmeldenummer: PCT/EP2000/004847
(87) Internationale Veröffentlichungsnummer: WO 2000/076329

(56) Entgegenhaltungen:
- WO-A-98/09542
- WO-A-98/25478
- DE-A- 3 707 032
- DE-U- 29 910 322
- US-A- 3 186 909
- US-A- 4 696 634
- MALI BOONYARATPALIN ET AL.: "Diet preparations for aquarium fishes" AQUACULTURE, Bd. 12, Nr. 1, 1977, Seiten 53-62, XP000930081 AMSTERDAM, NL
- PATENT ABSTRACTS OF JAPAN vol. 1996, no. 05, 31. Mai 1996 (1996-05-31) -& JP 08 009895 A (NIPPON DOUBUTSU YAKUHIN KK), 16. Januar 1996 (1996-01-16)

## Beschreibung

Üblicherweise sind gegenwärtig Fischfuttermittel, besonders für Zierfische, durch einen relativ hohen Proteingehalt (ca. 40 - 50 %) und Stärkeanteil (ca. 16 - 30 %) bei gleichzeitig relativ geringem Energiegehalt (ca. 0,5 - 8 % Fett) charakterisiert. Solche Futtermittel lassen sich industriell unproblematisch in für die Zierfischhaltung üblichen Applikationsformen (Futterflocken, schwimmfähige Extrudate, Tabletten) herstellen und führen zu einem guten Wachstum und zu einer ausreichenden Ernährung der Tiere.

Zur Aufzucht und Mast von Nutzfischen werden dagegen zunehmend energiereiche Futter in Form von Extrudaten oder Pellets eingesetzt, die neben einem für das Wachstum wichtigen hohen Proteingehalt Fettgehalte bis zu 25 % aufweisen (BioMar GmbH, Firmenschrift 'Fütterung/Umwelt - Ecoline'). Die Verwendung solcher Futtermittel in der professionellen Fischzucht führt im Vergleich zu fettärmeren Produkten zu weniger wasserbelastenden stickstoffhaltigen Ausscheidungsprodukten (Ammoniak, Nitrit, Nitrat), da der Energiebedarf der Tiere überwiegend durch die stickstofffreien Fette gedeckt wird. Die stickstoffhaltigen Proteine dienen daher weitestgehend dem Wachstum und müssen nicht zur Energiegewinnung unter Bildung stickstoffhaltiger Abbauprodukte verstoffwechselt werden. Fette sind darüber hinaus in der Fischernährung Kohlenhydraten als Energieträger überlegen, da Fische - anders als entwicklungsgeschichtlich höher stehende Tiere - aufgrund ihrer metabolischen Eigenheiten Kohlenhydrate nur begrenzt verwerten können. Der Einsatz von fettreichen Fischfuttermitteln in der Nutzfischhaltung hat durch die Einsparung von Proteinen und die geringere Ausscheidung von wasserbelastenden Stoffen daher sowohl ökonomische als auch ökologische Vorteile.

Derartige Futtermittel wurden bisher für Zierfische im Aquarium oder in Gartenteichen nicht eingesetzt, da den genannten Vorteilen gravierende technologische Nachteile entgegenstanden. Das Herstellen von langsam absinkenden Futterflocken, wie sie aufgrund der Größe der Tiere in der Zierfischernährung üblich sind, mit hohen Fettanteilen war bisher im technischen Maßstab nicht möglich, da fettreiche Futtermischungen zur Herstellung von Flocken nach den üblichen Verfahren auf den normalerweise eingesetzten Walzentrocknern verkleben und sich nicht zu einer zerkleinerbaren Folienbahn ablösen lassen. WO 98/25478 beschreibt die Herstellung eines Flockenfutters für Fische und Invertebraten, dessen Flochen eine gleichmäßige Form, variable Diche und einen Wassergehalt von 1-30% aufweisen.

Überraschenderweise wurde nun gefunden, daß mit einem neuen Produktionsverfahren auch flockierte Futter mit hohen Energiegehalten in Form von Fett/Öl hergestellt und damit die Kondition von Fischen deutlich verbessert werden kann.

Das neue Verfahren basiert auf dem Auswalzen von Formkörpern, die z.B. durch Extrusion oder Pelletierung hergestellt werden können, zu dünnen im Wasser langsam absinkenden Futterflocken.

So wurden energiereiche Futterflocken mit dem neuen Verfahren hergestellt und an typischen Zierfischen für Aquarien bezüglich Eignung im Vergleich zu traditionellen Standardfuttern mit niedrigen Fettgehalten getestet: In einem Fütterungsversuch an zwei verschiedenen Zierfischspezies (Labidochromis caeruleus, Barbus conchonius) wurde ein flockiertes Versuchsfutter mit hohem Energiegehalt (33 % Fett) im Vergleich zum Kontrollfutter (7 % Fett) über einen Zeitraum von 12 Wochen bei einer Wassertemperatur von 25°C auf Wirksamkeit getestet.

Die Ergebnisse demonstrieren eindeutig, daß bei der Applikation des energiereichen Flockenfutters die Futteraufnahme deutlich erhöht und der Zuwachs der Fische signifikant besser im Vergleich zur Kontrolle ist. Ähnliche Ergebnisse zeigten sich bei Verfütterung von Versuchsflocken mit 18 % bzw. 23 % Fett im Vergleich zu einer Testdiät mit 8 % Fett.

Unter Berücksichtigung dieser überraschenden neuen Befunde ist daher die Herstellung und der Einsatz fettreicher Flockenfutter auch für die Haltung von Zierfischen vorteilhaft.

Gegenstand der vorliegenden Erfindung ist daher eine energie-/fettreiche Futterflocke für Fische und Invertebraten sowie die Herstellung und Verwendung dieser Flocken.

Bevorzugt ist ein flockiertes Zierfischfutter, das in homogener Verteilung Energie in Form von 12 - 40 % Fett enthält, bevorzugt 12 bis 20 % und ganz besonders bevorzugt ca. 15 bis 19 % Fett bei einem Feuchtigkeitsgehalt von 1 bis 30 %, bevorzugt 4 bis 25 % und ganz besonders bevorzugt ca. 8 %. Daneben enthält dieses Futter die üblichen Grundbestandteile wie 25 - 50 % Protein, bevorzugt 43 %, 10 bis 25 % Stärke, bevorzugt 13 % und 10 bis 60 % N-freie Extraktstoffe, bevorzugt 20 %, wobei alle Mengenangaben auf das Gewicht des Produktes bezogen sind.

Für die Herstellung von energiereichen Futterflocken können nach der nachfolgend aufgeführten Methode alle handelsüblichen flüssigen und festen Fette und Öle tierischen und pflanzlichen Ursprungs einzeln oder in Kombination eingesetzt werden (z.B. Sojaöl, Fischöle, Seetierfett, Talg, Sonnenblumenöl, Maiskeimöl).

Die Energiezugabe in Form von Fett/Öl in hohen Dosierungen für flockiertes Futter für Fische und Invertebraten erfolgt während des Mischens der mehlförmigen und flüssigen Futterkomponenten. Somit ist eine homogene Verteilung bereits in der Rohstoffmischung vor dem nachgeschalteten Extrusionsoder Pelletierprozeß und anschließendem Auswalzen zu Flocken gewährleistet.

Bei der Herstellung von Extrudaten werden die abgewogenen Rezepturkomponenten in einem Mischer mit den erforderlichen Mengen an Energie in Form von Fett/Öl homogen vermischt und extrudiert. Dabei werden beispielsweise zunächst 330 kg energiereiche Rohstoffmischung mit einer Extrudierschneckendrehzahl von 60 - 98 %, bevorzugt 75% und einer Temperatur im Mehleinzugsbereich von 40 - 160°C, bevorzugt 75°C und im Düsenkopf von 40 - 190°C, bevorzugt 75°C unter Zugabe von 1 - 100 1, bevorzugt 30 1 Wasser pro Stunde zu 1 bis 50, bevorzugt 2 - 4 mm langen Extrudaten mit einem Stickdurchmesser von 1 bis 10 mm, bevcrzugt 2 - 4 mm extrudiert.

Bedingt durch die Geometrie der Austrittsdüse des Extruders und der vorzugebenden Abschnittslänge des Extrusionsstrangs werden Abschnitte mit gleicher dreidimensionaler Form erhalten.

Diese Extrudate werden anschließend direkt in einem Walzenstuhl zu gleichmäßig geformten Flocken mit einer Dicke zwischen 10 µm und 5 mm und einem Durchmesser zwischen 1 bis 100 mm ausgewalzt, die ebenfalls eine gleiche dreidimensionale Form besitzen.

Zum Auswalzen geeignete Formkörper mit annähernd gleicher dreidimensionaler Form lassen sich auch durch Pelletisierung der fettreichen Rohstoffmischung erhalten, die anschließend zu gleichgeformten Flocken ausgewalzt werden können.

Bei der Herstellung der Formkörper mittels Extrusion ist die Temperatur auf < 80°C reduzierbar.

Bei diesem Verfahren sind nach der Herstellung keine zusätzlichen Arbeitsschritte wie z.B. Besprühen oder Beschichten mit Ölen/Fetten zur Energieanreicherung - wie bei herkömmlichen Pellets - erforderlich.

Ein weiterer Gegenstand der Erfindung ist die Verwendung des erfindungsgemäßen homogenen fettreichen Futters zur Förderung von Wachstum, Futteraufnahme und Kondition von Zierfischen im Süß- und Seewasser, zur Verbesserung der Widerstandsfähigkeit gegen Streß, zur Verhinderung von Verlusten bei ungünstigen Haltungsbedingungen wie hohen Temperaturen im Sommer und tiefen Temperaturen im Winter bei der Haltung von Teichfischen sowie zur Verminderung der das Algenwachstum fördernden Stickstoff- und Phosphorausscheidung.

## Patentansprüche

1. Homogenes fettreiches Flockenfutter für Fische und Invertebraten **gekennzeichnet durch** einen Fettgehalt von 12 bis 40 % bei einer Restfeuchte von 1 bis 30 % in Form von gleichmäßig geformten Flocken.

2. Homogenes fettreiches Futter gemäß Anspruch 1, **dadurch gekennzeichnet, daß** es in homogener Verteilung 12 bis 20 % Fett bei einem Feuchtigkeitsgehalt von 4 bis 25 % enthält.

3. Homogenes fettreiches Futter gemäß Anspruch 2, **dadurch , gekennzeichnet, daß** es in homogener Verteilung 18 % Fett bei einem Feuchtigkeitsgehalt von 8 % enthält.

4. Homogenes fettreiches Futter gemäß der Ansprüche 1 bis 3, **dadurch gekennzeichnet, daß** es in homogener Verteilung als weitere Bestandteile 25 - 50 % Protein, bevorzugt 43 %, 10 bis 25 % Stärke, bevorzugt 13 % und 10 bis 60 % N-freie Extraktstoffe, bevorzugt 20 % enthält.

5. Futter gemäß der Ansprüche 1 bis 4 enthaltend als flüssige und/oder feste Fett/Ölkomponente Sojaöl, Fischöle, Seetierfett, Talg, Sonnenblumenöl, Maiskeimöl oder deren Mischungen.

6. Futter gemäß der Ansprüche 1 bis 5 hergestellt durch Vermischen der Rohstoffe, Extrusion der Rohstoffmischung zu Formkörpern mit gleicher Raumform und anschließendem Auswalzen der Formkörper zu Flocken gleicher Form.

7. Futter gemäß der Ansprüche 1 bis 5 hergestellt durch Vermischen der Rohstoffe, Pelletisierung der Rohstoffmischung zu Formkörpern mit gleicher Raumform und anschließendem Auswalzen der Formkörper zu Flocken gleicher Form.

8. Verfahren zur Herstellung fettreicher Futterflocken gemäß der Ansprüche 1 bis 6, **dadurch gekennzeichnet, daß** die Rezepturkomponenten homogen vermischt werden und dann mit einer Extrudierschneckendrehzahl von 60 - 98 %, bevorzugt 75 % und einer Temperatur im Mehleinzugsbereich von 40 - 160 °C, bevorzugt 75°C und im Düsenkopf von 40 - 190 °C, bevorzugt 75°C unter Zugabe von 1 - 100 1, bevorzugt 30 1 Wasser pro Stunde zu 1 bis 50, bevorzugt 2 - 4 mm langen Extrudaten mit einem Stickdurchmesser von 1 bis 10 mm, bevorzugt 2 - 4 mm extrudiert und anschließend auswalzt zu Flocken mit einer Dicke zwischen 10 µm und 5 mm und einem Durchmesser zwischen 1 mm und 100 mm.

9. Verwendung eines homogenen fettreichen Futters gemäß der Ansprüche 1 - 7 zur Förderung von Wachstum, Futteraufnahme und Kondition von Zierfischen im Süß- und Seewasser.

10. Verwendung eines homogenen fettreichen Futters gemäß der Ansprüche 1 - 7 für die Zierfischhaltung zur Verbesserung der Widerstandsfähigkeit gegen Streß.

11. Verwendung eines homogenen fettreichen Futters gemäß der Ansprüche 1 - 7 für die Zierfischhaltung zur Verhinderung von Verlusten bei ungünstigen Haltungsbedingungen wie hohen Temperaturen im Sommer und tiefen Temperaturen im Winter bei der Haltung von Teichfischen.

12. Verwendung eines homogenen fettreichen Futters gemäß der Ansprüche 1 - 7 für die Zierfischhaltung zur Verminderung der das Algenwachstum fördernden Stickstoffund Phosphorausscheidung.

## Claims

1. Homogeneous fat-rich flake feed for fish and invertebrates, **characterised by** a fat content of 12 to 40% at a residual moisture of 1 to 30% in the form of uniformly formed flakes.

2. Homogeneous fat-rich feed according to claim 1, **characterised in that** it contains, in homogeneous distribution, 12 to 20% fat at a moisture content of 4 to 25%.

3. Homogeneous fat-rich feed according to claim 2, **characterised in that** it contains, in homogeneous distribution, 18% fat at a moisture content of 8%.

4. Homogeneous fat-rich feed according to claims 1 to 3, **characterised in that** it contains, in homogeneous distribution, as further components
25 - 50%, preferably 43%, protein,
10 to 25%, preferably 13%, starch, and
10 to 60%, preferably 20%, N -free extract materials.

5. Feed according to claims 1 to 4 containing, as liquid and/or solid fat/oil components, soya oil, fish oils, marine animal fats, tallow, sunflower oil, maize oil or their mixtures.

6. Feed according to claims 1 to 5, manufactured by mixing of the raw materials, extrusion of the raw material mixture to give formed bodies with equal spatial form and subsequent rolling out of the formed bodies to give flakes of equal form.

7. Feed according to claims 1 to 5 manufactured by mixing of the raw materials, pelletising of the raw material mixture to give formed bodies with equal spatial form and subsequent rolling out of the formed bodies to give flakes of equal form.

8. Process for the manufacture of fat-rich feed flakes according to claims 1 to 6, **characterised in that** the recipe components are homogeneously mixed and then extruded with a barrel extruder speed of 60 - 98%, preferably 75% and a temperature in the meal introduction region of 40 - 160°C, preferably 75°C and in the nozzle head of 40 - 190°C, preferably 75°C, with addition of 1 -100 I, preferably 30 I of water per hour to give 1 to 50, preferably 2-4 mm long extrudates with a stick diameter of 1 to 10 mm, preferably 2 - 4 mm and subsequently rolled out to give flakes with a thickness between 10 µm and 5 mm and a diameter between 1 mm and 100 mm.

9. Use of a homogeneous fat-rich feed according to claims 1 -7 for the promotion of growth, feed uptake and condition of ornamental fish in fresh and sea water.

10. Use of a homogeneous fat-rich feed according to claims 1-7 for ornamental fish maintenance for the improvement of the resistance against stress.

11. Use of a homogeneous fat-rich feed according to claims 1-7 for ornamental fish maintenance for the prevention of losses in the case of unfavourable maintenance conditions, such as high temperatures in the summer and low temperatures in the winter in the case of the maintenance of pond fish.

12. Use of a homogeneous fat-rich feed according to claims 1-7 for ornamental fish maintenance for the reduction of nitrogen and phosphorus excretion promoting algal growth.

## Revendications

1. Flocons alimentaires riches en matières grasses, homogènes, pour poissons et invertébrés, **caractérisés en ce qu'**ils ont une teneur en corps gras de 12 à 40 % pour une humidité résiduelle de 1 à 30 %, sous forme de flocons de forme régulière.

2. Aliment riche en matières grasses, homogène, selon la revendication 1, **caractérisé en ce qu'**il renferme une répartition homogène de 12 à 20 % de matières grasses pour une teneur en humidité de 4 à 25 %.

3. Produit alimentaire riche en matières grasses, homogène, selon la revendication 2, **caractérisé en ce qu'**il renferme en proportion homogène 18 % en matières grasses pour une teneur en humidité de 8 %.

4. Produit alimentaire riche en matières grasses, homogène, selon les revendications 1 à 3, **caractérisé en ce qu'**il renferme en proportion homogène en tant qu'autre constituant, de 25 à 50 % de protéine, de préférence 43 %, de 10 à 25 % d'amidon, de préférence 13 %, et de 10 à 60 % d'extrait sans azote, de préférence 20%.

5. Produit alimentaire selon l'une quelconque des revendications 1 à 4, renfermant en tant que composant gras/huileux, liquide et/ou solide, de l'huile de soja, de l'huile de poisson, de l'huile d'animaux marins, du suif, de l'huile de tournesol, de l'huile de maïs ou leurs mélanges.

6. Produit alimentaire selon l'une quelconque des revendications 1 à 5, préparé par mélange des matières premières, extrusion du mélange de matières premières en un corps façonné de forme uniforme et, enfin, découpage du cordon en flocons de forme régulière.

7. Produit alimentaire selon l'une quelconque des revendications 1 à 5, préparé par mélange des matières premières, granulation du mélange de matières premières en corpuscules de forme identique et découpage des corpuscules en flocons de forme régulière.

8. Procédé de préparation de flocons alimentaires riches en matières grasses selon l'une quelconque des revendications 1 à 6, **caractérisé en ce que** l'on mélange de façon homogène les composants de la formulation puis on les extrude avec un régime de vis d'extrudeuse de 60 à 98 %, de préférence 75 %, et une température dans la jarre d'entrée de moulin de 40 à 160°C, de préférence de 75°C, et une température en tête d'extrusion de 40 à 190°C, de préférence 75°C, avec addition de 1 à 100 litres, de préférence 30 litres d'eau par heure, en extrudats de 1 à 50, de préférence de 2 à 4 mm, de longueur, avec un diamètre de particule de 1 à 10 mm, de préférence de 2 à 4 mm, et enfin on les découpe en flocons d'une épaisseur de 10 µm à 5 mm, et d'un diamètre de 1 mm à 100 mm.

9. Utilisation d'un produit alimentaire riche en matières grasses, homogène, selon l'une quelconque des revendications 1 à 7, pour promouvoir la croissance, l'alimentation et la santé des poissons d'aquarium d'eau douce et d'eau salée.

10. Utilisation d'un produit alimentaire riche en matières grasses, homogène, selon l'une quelconque des revendications 1 à 7, pour l'élevage de poissons d'aquarium pour l'amélioration de leur résistance au stress.

11. Utilisation d'un produit alimentaire riche en matières grasses, homogène, selon l'une quelconque des revendications 1 à 7, pour l'élevage de poissons d'arquarium pour empêcher des pertes dues à des conditions d'élevage inappropriée comme des températures élevées en été et des températures basses en hiver pour l'entretien des poissons d'élevage.

12. Utilisation d'un produit alimentaire riche en matières grasses, homogène, selon l'une quelconque des revendications 1 à 7, pour l'élevage de poissons d'aquarium pour diminuer la prolifération des algues résultant de la libération d'azote et de phosphore.
